# EUROPEAN PATENT APPLICATION

(11) **EP 3 800 870 A1**
(43) Date of publication of application: **07.04.2021**
(21) Application number: 18922730.9
(22) Date of filing: 26.09.2018
(51) Int. Cl.: H04L 29/12

(54) **METHOD AND DEVICE FOR CONTROLLING MULTI-CNAME TRAFFIC RATIO**

(30) Priority: 13.06.2018 CN 201810610126
(71) Applicant: Wangsu Science & Technology Co., Ltd., Shanghai 200030 (CN)
(72) Inventor: CHEN, Danjiang, Shanghai 200030 (CN); WU, Xiaoying, Shanghai 200030 (CN)
(74) Representative: de Arpe Fernandez, Manuel
(86) International application number: PCT/CN2018/107475
(87) International publication number: WO 2019/237557

(57) **Abstract**

A method for controlling a ratio of multi-CNAME traffic includes: receiving, by a target authoritative DNS server, an A record query request for a target domain name sent by a local DNS server, and determining, by the target authoritative DNS server, all CNAME domain names according to stored CNAME records of the target domain name; acquiring, by the target authoritative DNS server, IP addresses corresponding to each CNAME domain name of all the CNAME domain names from an authoritative DNS server corresponding to each CNAME domain name; combining, by the target authoritative DNS server, IP addresses corresponding to all the CNAME domain names according to a preset traffic pulling ratio of the target domain name, to generate at least one IP group; and randomly feeding back, by the target authoritative DNS server, one IP group of the at least one IP group to the local DNS server.

## Description

### FIELD OF DISCLOSURE

The present disclosure generally relates to the field of domain name resolution technologies, and more particularly, relates to a method and device for controlling a ratio of multi-CNAME traffic.

### BACKGROUND

At present, there are many CDN service providers, and there may be multiple CDN service providers that jointly provide CDN acceleration service for one customer. From the perspective of bandwidth upper limit and cost considerations, both the customer and CDN service providers have a need to control the proportion of bandwidth carried by each CDN service provider.

The customer or CDN service providers may perform configuration in advance at the authoritative DNS server of the customer domain name by using multiple CNAME (which may be called "alias") records (a CNAME record may be in the form of a mapping relationship between a customer domain name and a CNAME domain name), and configure different traffic pulling proportions for the CDN service providers to pull the access traffic for the customer's domain name. For example, there are two CNAME records: M and N for the customer domain name www.XXX.com at the authoritative DNS server, and the corresponding traffic pulling ratio is 4:1. Therefore, after receiving an A record query request from a local DNS server, the authoritative DNS server may select the CNAME records with a probability of 4:1 and feed back the selected CNAME records to the local DNS server. In this way, the local DNS server may acquire, from authoritative DNS servers designated by the CNAME records, the access IPs of the CDN nodes that provide the acceleration service for the customer domain name.

In the process of implementing the present disclosure, the applicants have found that the existing technologies have at least the following problems:

After the local DNS server acquires the access IP address of a CDN node, the local DNS server may cache the access IP for a certain period of time. During the caching period, the local DNS server will pull all access traffic for the customer's domain name within its service range to the CDN node without any access traffic reaching the CDN nodes of other CDN service providers. Further, after the caching period expires, if the authoritative DNS server feeds back the access IP of a CDN node of a different CDN service provider, the local DNS server will pull all the access traffic for the customer's domain name in the service range to this CDN node, while the access traffic to the previous CDN node will become zero. Therefore, the traffic load for a CDN node is relatively high in a short period of time, while the traffic of the CDN node fluctuates greatly in the long term.

### BRIEF SUMMARY OF THE DISCLOSURE

To solve the problems in the existing technologies, the embodiments of the present disclosure provide a method and device for controlling a ratio of multi-CNAME traffic. The technical solutions are as follows:
In one aspect, a method for controlling a ratio of multi-CNAME traffic is provided. The method includes:
receiving, by a target authoritative DNS server, an A record query request for a target domain name sent by a local DNS server, and determining, by the target authoritative DNS server, all CNAME domain names according to stored CNAME records of the target domain name;
acquiring, by the target authoritative DNS server, IP addresses corresponding to each CNAME domain name of all the CNAME domain names from an authoritative DNS server corresponding to each CNAME domain name;
combining, by the target authoritative DNS server, IP addresses corresponding to all the CNAME domain names according to a preset traffic pulling ratio of the target domain name, to generate at least one IP group;
randomly feeding back, by the target authoritative DNS server, one IP group of the at least one IP group to the local DNS server.

Optionally, the A record query request of the target domain name includes an IP address of the local DNS server or an IP address of a user terminal; and
acquiring, by the target authoritative DNS server, the IP addresses corresponding to each CNAME domain name for all the CNAME domain names from the authoritative DNS server corresponding to each CNAME domain name includes:
for each CNAME domain name, sending, by the target authoritative DNS server, an A record query request of the CNAME domain name including the IP address of the local DNS server or the IP address of the user terminal to an authoritative DNS server corresponding to the CNAME domain name, and
receiving, by the target authoritative DNS server, IP addresses corresponding to the CNAME domain name determined and fed back by the authoritative DNS server corresponding to the CNAME domain name based on the IP address of the local DNS server or the IP address of the user terminal.

Optionally, the A record query request of the target domain name includes an IP address of the local DNS server or an IP address of a user terminal; and
acquiring, by the target authoritative DNS server, the IP addresses corresponding to each CNAME domain name for all the CNAME domain names from the authoritative DNS server corresponding to each CNAME domain name includes:
for each CNAME domain name, sending, by the target authoritative DNS server, an A record synchronization request to the authoritative DNS server corresponding to the CNAME domain name;
receiving, by the target authoritative DNS server, all A records sent by the authoritative DNS server corresponding to the CNAME domain name;
determining, by the target authoritative DNS server, IP addresses corresponding to the CNAME domain name in all the A records based on the IP address of the local DNS server or the IP address of the user terminal.

Optionally, after generating the at least one IP group, the method further includes:
within a preset caching period of the A record of the target domain name, if the A record query request including the IP address of the local DNS server or the IP address of the user terminal is received again, randomly feeding back one IP group of the at least one IP group by the target authoritative DNS server.

Optionally, before acquiring, by the target authoritative DNS server, the IP addresses corresponding to each CNAME domain name for all the CNAME domain names from the authoritative DNS server corresponding to each CNAME domain name, the method further includes:
for each CNAME domain name, if the target authoritative DNS server itself has stored an authoritative DNS server record of the CNAME domain name, determining, by the target authoritative DNS server, the authoritative DNS server corresponding to the CNAME domain name according to the authoritative DNS server record, and if the target authoritative DNS server itself has not stored the authoritative DNS server record of the CNAME domain name, recursively/iteratively querying, by the target authoritative DNS server, the authoritative DNS server corresponding to the CNAME domain name.

Optionally, within each IP group, a ratio of a total probability of IP addresses of CDN nodes being selected for each CDN service provider satisfies the traffic pulling ratio of the target domain name.

In another aspect, a device for controlling a ratio of multi-CNAME traffic is provided. The device includes:
a decision module that is configured to receive an A record query request for a target domain name sent by a local DNS server, and determine all CNAME domain names according to stored CNAME records of the target domain name;
an acquisition module that is configured to acquire, from an authoritative DNS server corresponding to each CNAME domain name, IP addresses corresponding to each CNAME domain name of all the CNAME domain names;
a combination module that is configured to combine IP addresses corresponding to all the CNAME domain names according to a preset traffic pulling ratio of the target domain name to generate at least one IP group; and
a feedback module that is configured to randomly feed back one IP group of the at least one IP group to the local DNS server.

Optionally, the A record query request of the target domain name includes an IP address of the local DNS server or an IP address of a user terminal; and
the acquisition module is specifically configured to:
for each CNAME domain name, send an A record query request of the CNAME domain name including the IP address of the local DNS server or the IP address of the user terminal to an authoritative DNS server corresponding to the CNAME domain name, and
receive IP addresses corresponding to the CNAME domain name determined and fed back, by the authoritative DNS server corresponding to the CNAME domain name, based on the IP address of the local DNS server or the IP address of the user terminal.

Optionally, the A record query request of the target domain name includes an IP address of the local DNS server or an IP address of the user terminal; and
the acquisition module is specifically configured to:
for each CNAME domain name, send, by a target authoritative DNS server, an A record synchronization request to the authoritative DNS server corresponding to the CNAME domain name,
receive, by the target authoritative DNS server, all A records sent by the authoritative DNS server corresponding to the CNAME domain name, and
determine, by the target authoritative DNS server, IP addresses corresponding to the CNAME domain name in all the A records based on the IP address of the local DNS server or the IP address of the user terminal.

Optionally, the feedback module is further configured to:
within a preset caching period of the A record of the target domain name, if the A record query request including the IP address of the local DNS server or the IP address of the user terminal is received again, randomly feed back one IP group of the at least one IP group.

Optionally, the decision module is further configured to:
for each CNAME domain name, if the target authoritative DNS server itself has stored an authoritative DNS server record of the CNAME domain name, determine the authoritative DNS server corresponding to the CNAME domain name according to the authoritative DNS server record, and if the target authoritative DNS server itself has not stored the authoritative DNS server record of the CNAME domain name, recursively/iteratively query the authoritative DNS server corresponding to the CNAME domain name.

Optionally, within each IP group, a ratio of a total probability of IP addresses of CDN nodes being selected for each CDN service provider satisfies the traffic pulling ratio of the target domain name.

In another aspect, an authoritative DNS server is provided. The authoritative DNS server includes a processor and a memory. The memory stores at least one instruction, at least one program, a code set, or a set of instructions. The at least one instruction, at least one program, code set, or set of instructions are loaded and executed by the processor to implement the methods for controlling a ratio of multi-CNAME traffic described above.

In another aspect, a computer-readable storage medium is provided. The computer-readable storage medium stores at least one instruction, at least one program, a code set, or a set of instructions. The at least one instruction, at least one program, code set, or set of instructions are loaded and executed by the processor to implement the methods for controlling a ratio of multi-CNAME traffic described above.

The beneficial effects brought by the technical solutions provided by the embodiments of the present disclosure include:

In the embodiments of the present disclosure, a target authoritative DNS server receives an A record query request for a target domain name sent by a local DNS server, and determines all CNAME domain names according to the stored CNAME records of the target domain name. The target authoritative DNS server acquires, from the authoritative DNS servers corresponding to all the CNAME domain names, the IP addresses corresponding to each CNAME domain name. The target authoritative DNS server combines the IP addresses corresponding to all the CNAME domain names according to a preset traffic pulling ratio of the target domain name, to generate at least one IP group. The target authoritative DNS server randomly feeds back one IP group of the at least one IP group to the local DNS server. In this way, the authoritative DNS server feeds back the IP group to the local DNS server, where the IP group may include CDN nodes of multiple CDN service providers. Whether with the caching period or after the caching period of the local DNS server, the access traffic for the domain name may be both evenly pulled to the CDN nodes of different CDN service providers according to the traffic pulling ratio. Therefore, the problem in the existing technologies, that the traffic load on a CDN node is relatively high in a short period of time but fluctuates a lot in the long term, may be effectively alleviated.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a schematic diagram of a network architecture for controlling a ratio of multi-CNAME traffic according to some embodiments of the present disclosure;
FIG. 2 is a flowchart of a method for controlling a ratio of multi-CNAME traffic according to some embodiments of the present disclosure;
FIG. 3 is a schematic structural diagram of a device for controlling a ratio of multi-CNAME traffic according to some embodiments of the present disclosure; and
FIG. 4 is a schematic structural diagram of an authoritative DNS server according to some embodiments of the present disclosure.

### DETAILED DESCRIPTION

To make the objective, technical solutions, and advantages of the present disclosure clearer, the implementations of the present disclosure will be made in detail hereinafter with reference to the accompanying drawings.

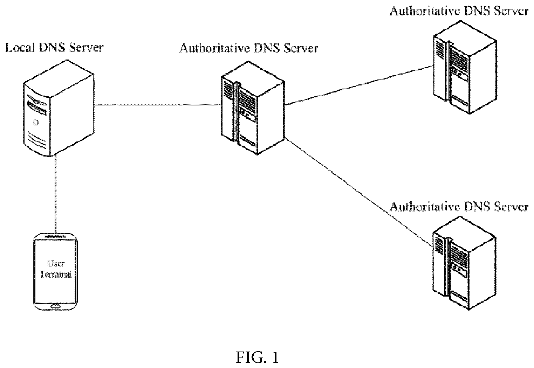

The embodiments of the present disclosure provide a method for controlling a ratio of multi-CNAME traffic. The execution entity of the method may be an authoritative DNS server that is supplemented by other DNS servers in the DNS server system. The authoritative DNS server may store A records and CNAME records corresponding to a large number of domain names. When the A record corresponding to a domain name needs to be fed back to a local DNS server, the authoritative DNS server may retrieve the corresponding A record from the local database, or acquire the corresponding A record from the database of other authoritative DNS servers, and then feed back the A record to the local DNS server. The local DNS server may be configured to receive a domain name access request from a user terminal, and then feed back the corresponding IP addresses to the user terminal based on the A record fed back by the authoritative DNS server. The specific network architecture may be as shown in FIG. 1. The authoritative DNS server may include a processor, a memory, and a transceiver. The processor may be configured to process the controlling of the ratio of multi-CNAME traffic in the following process. The memory may be used to store data required and generated in the following process, such as CNAME records, A records, etc. The transceiver may be configured to receive and transmit relevant data during the processing, e.g., receive an A record query request, feed back an IP group, etc.

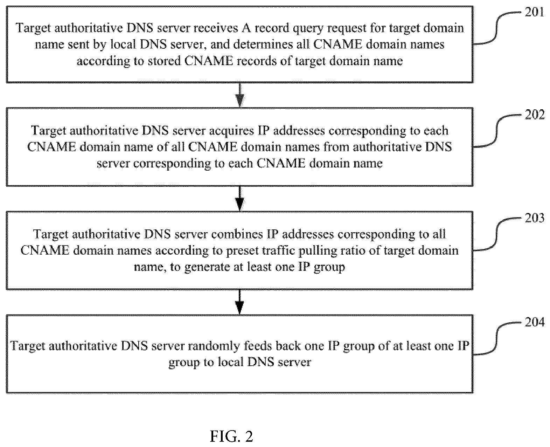

The flowchart shown in FIG. 2 will be made in detail hereinafter with reference to specific implementations. The content may be as follows:
Step 201: A target authoritative DNS server receives an A record query request for a target domain name sent by a local DNS server, and determines all CNAME domain names according to stored CNAME records of the target domain name.

In one implementation, if a domain name holder wants to accelerate the access to its own domain name (for illustration purpose, taking a target domain name as an example) through the CDN system, multiple CDN service providers may be selected to provide the network acceleration service for the target domain name. Alternatively, after the domain name holder selects a CDN service provider, the selected CDN service provider may also distribute the acceleration service of the target domain name to other CDN service providers. In either way, multiple CDN service providers may jointly provide the CDN acceleration service for the target domain name. Before providing the CDN acceleration service, each CDN service provider may add CNAME record of the target domain name to a respective designated domain name for providing the CDN acceleration service, where the designated domain name is bound to the IP addresses of the CDN nodes of the CDN service provider. Afterwards, each CDN service provider may then set its own CNAME record in the target authoritative DNS server corresponding to the target domain name. The CNAME record comprises the customer domain name and the CNAME domain name, where the customer domain name is the target domain name, and the CNAME domain name is the above-described designated domain name for providing the CDN acceleration service.

Accordingly, when a user wants to access the target domain name, the user may input the target domain name on a user terminal. The user terminal may then send the access request of the target domain name to the corresponding local DNS server according to the preset DNS server proxy. After receiving the access request, the local DNS server may query whether the A record of the target domain name is stored in the local database. If the A record of the target domain name is stored in the local database, the local DNS server may directly feed back the IP addresses corresponding to the target domain name in the A record. If the A record of the target domain name is not stored in the local database, the local DNS server may determine a target authoritative DNS server corresponding to the target domain name, and then send the A record query request of the target domain name to the target authoritative DNS server. After receiving the A record query request, the target authoritative DNS server may query all CNAME records of the target domain name stored in the local, and then determine all CNAME domain names corresponding to the target domain name in the CNAME records.

Step 202: The target authoritative DNS server acquires IP addresses corresponding to each CNAME domain name of all the CNAME domain names from an authoritative DNS server corresponding to each CNAME domain name.

In one implementation, after determining all the CNAME domain names corresponding to the target domain name, the target authoritative DNS server may determine an authoritative DNS server corresponding to each CNAME domain name, and then acquire IP addresses corresponding to each CNAME domain name from the authoritative DNS server. It may be understood that different CNAME domain names are provided by different CDN service providers, and each CNAME domain name corresponds to the IP addresses of multiple CDN nodes provided by one CDN service provider for providing the access acceleration of the target domain name.

Optionally, the A record query request of the target domain name may include the IP address of the local DNS server or the IP address of the user terminal. Correspondingly, the process of Step 202 may be specifically as follows: for each CNAME domain name, the target authoritative DNS server sends an A record query request including the IP address of the local DNS server or the IP address of the user terminal to an authoritative DNS server corresponding to the CNAME domain name; and the target authoritative DNS server receives IP addresses, corresponding to the CNAME domain name, determined, and fed back, by the authoritative DNS server corresponding to the CNAME domain name based on the IP address of the local DNS server or the IP address of the user terminal.

In one implementation, based on the different configurations of the local DNS servers, the A record query request of the target domain name sent, by the local DNS server, to the target authoritative DNS server may include the IP address of the local DNS server or the IP address of the user terminal. In one scenario, if the A record query request includes the IP address of the local DNS server, for each CNAME domain name, the target authoritative DNS server may send an A record query request, of the CNAME domain name, including the IP address of the local DNS server to an authoritative DNS server corresponding to the CNAME domain name. After receiving the A record query request, the authoritative DNS server corresponding to the CNAME domain name may query all the A records, corresponding to CNAME domain name, stored in the local, and then determine, among these A records, the IP addresses that belong to the same network segment as the local DNS server or the IP addresses of CDN nodes that are physically close to the local DNS server, and feeds back these IP addresses to the target authoritative DNS server. In another scenario, if the A record query request includes the IP address of the user terminal, for each CNAME domain name, the target authoritative DNS server may send an A record query request of the CNAME domain name, including the IP address of the user terminal, to the authoritative DNS server corresponding to the CNAME domain name. After receiving the A record query request, the authoritative DNS server corresponding to the CNAME domain name may query all the A records, corresponding to the CNAME domain name, stored in the local, and then determine, among these A records, the IP addresses that belong to the same network segment as the IP address of the user terminal or the IP addresses of CDN nodes that are physically close to the user terminal, and feeds back these IP addresses to the target authoritative DNS server. In this way, the target authoritative DNS server may receive the IP addresses corresponding to the CNAME domain name fed back by the authoritative DNS server corresponding to the CNAME domain name.

Optionally, the target authoritative DNS server may obtain the IP addresses corresponding to each CNAME domain name by synchronizing the A record database. Correspondingly, the process of Step 202 may be specifically as follows: for each CNAME domain name, the target authoritative DNS server sends an A record synchronization request to the authoritative DNS server corresponding to the CNAME domain name; the target authoritative DNS server receives all A records sent by the authoritative DNS server corresponding to the CNAME domain name; and the target authoritative DNS server determines, among all the A records, the IP addresses corresponding to the CNAME domain name based on the IP address of the local DNS server or the IP address of the user terminal.

In one implementation, for each CNAME domain name, the target authoritative DNS server may send an A record synchronization request to the authoritative DNS server corresponding to the CNAME domain name. After receiving the A record synchronization request, the authoritative DNS server corresponding to the CNAME domain name may feed back all A records in the A record database maintained by the server to the target authoritative DNS server. In this way, after the target authoritative DNS server receives these A records, if the A record query request in Step 201 includes the IP address of the local DNS server, the IP addresses that belong to the same network segment as the IP address of the local DNS server or the IP addresses of CDN nodes that are physically close to the local DNS server may be determined among all the A records described above. If the A record query request in Step 201 includes the IP address of the user terminal, the IP addresses that belong to the same network segment as the IP address of the user terminal, or the IP addresses that are physically close to the user terminal may be determined among all the A records described above.

Optionally, before Step 202, the method further includes the following process: for each CNAME domain name, if the target authoritative DNS server itself has already stored an authoritative DNS server record of the CNAME domain name, the target authoritative DNS server determines the authoritative DNS server corresponding to the CNAME domain name according to the authoritative DNS server record; and if the target authoritative DNS server itself does not store the authoritative DNS server record of the CNAME domain name, the authoritative DNS server corresponding to the CNAME domain name may be recursively/iteratively queried.

In one implementation, after determining all the CNAME domain names corresponding to the target domain name, for each CNAME domain name, the target authoritative DNS server may detect whether the target authoritative DNS server itself has already stored the authoritative DNS server record of the CNAME domain name. If the target authoritative DNS server itself has already stored the authoritative DNS server record of the CNAME domain name, the target authoritative DNS server may determine the authoritative DNS server corresponding to the CNAME domain name according to the authoritative DNS server record. If the target authoritative DNS server itself does not store the authoritative DNS server record of the CNAME domain name, the target authoritative DNS server may recursively/iteratively query the authoritative DNS server corresponding to the CNAME domain name.

Step 203: The target authoritative DNS server combines the IP addresses corresponding to all the CNAME domain names according to a preset traffic pulling ratio of the target domain name, to generate at least one IP group.

In one implementation, when each CDN service provider sets its own CNAME record in the target authoritative DNS server, for the access traffic of the target domain name, the CDN service provider may also set a proportion of traffic carried by the CDN service provider itself, which may be embodied by a traffic pulling ratio. In this way, after obtaining the IP addresses corresponding to all the CNAME domain names, the target authoritative DNS server may retrieve the preset traffic pulling ratio of the target domain name, and then combine the IP addresses corresponding to all the CNAME domain names according to the traffic pulling ratio, to generate at least one IP group, where each IP group may include IP addresses corresponding to different CNAME domain names.

Optionally, in all the IP groups, the ratio of the total probability of the IP addresses of the CDN nodes being selected for each CDN service provider satisfies the traffic pulling ratio of the target domain name.

In one implementation, after obtaining the IP addresses corresponding to all the CNAME domain names, the target authoritative DNS server may combine the IP addresses based on the following rules:
1. The probability of each IP group being selected is completely the same.
2. The probability of each IP address, in each IP group, being selected is exactly the same.
3. In each IP group, the same IP address cannot exist.
4. Each IP group contains the IP addresses of the CDN nodes of as many CDN service providers as possible.
5. In all IP groups, the ratio of the total probability of the IP addresses of the CDN nodes being selected for each CDN service provider satisfies the traffic pulling ratio of the target domain name.

Optionally, after the IP groups are generated, the authoritative DNS server may cache the IP groups for a period of time. Correspondingly, after Step 203, the following process may be performed: within a preset caching period for the A record of the target domain name, if an A record query request including the IP address of the local DNS server or the IP address of the user terminal is received again, the target authoritative DNS server randomly feeds back one IP group among the at least one IP group.

In one implementation, after the target authoritative DNS server generates at least one IP group, the IP groups may be cached for a period of time (i.e., the preset caching period for the A record of the target domain name). During the caching period, if an A record query request including the IP address of the local DNS server or the IP address of the user terminal is received again, the target authoritative DNS server may randomly select an IP group among the at least one IP group and feed back the selected IP group to the terminal that sends the A record query request. It may be understood that the A record query request here may be sent by the above local DNS server, or may be sent by other DNS servers.

Step 204: The target authoritative DNS server randomly feeds back one IP group of the at least one IP group to the local DNS server.

In one implementation, after the target authoritative DNS server generates at least one IP group, one IP group may be randomly selected from the at least one IP group, and the selected IP group is then fed back to the local DNS server. Afterwards, the local DNS server may reorganize all IPs, in the IP group fed back by the target authoritative DNS server, in a random order, and then forward the reorganized IP group to the user terminal. In this way, after receiving the IP group, the user terminal may randomly select an IP address in the IP group, and then implement the target domain name access according to the IP address.

For ease of understanding, the processing flow of Steps 201 to 204 will be illustrated hereinafter by way of example:
Assuming that the target domain name is www.XXX.com, and the CDN acceleration service is provided by two CDN service providers. The CNAME domain names provided by the two CDN service providers are www.a.com and www.b.com, respectively, where the traffic pulling ratio of www.a.com and www.b.com is 4: 1.

A user terminal requests to access http://www.XXX.com/.

A local DNS server receives the access request, and queries the A record of www.XXX.com on the local DNS server itself. If the local DNS server itself has the www.XXX.com, the local DNS server feeds back the IP in the A record. If the local DNS server itself does not have the www.XXX.com, the local DNS server recursively/iteratively queries an authoritative DNS server of XXX.com.

The local DNS server sends an A record query request of www.XXX.com to the authoritative DNS server of XXX.com.

The authoritative DNS server of XXX.com receives the A record query request and finds the CNAME domain names: www.a.com and www.b.com, and the traffic pulling ratio of two CNAME domain names is 4:1.

The authoritative DNS server of XXX.com recursively/iteratively queries NS (Name Sever) record of the authoritative DNS server for the domain name of a.com and the authoritative DNS server of b.com.

The authoritative DNS server of XXX.com sends a request to the authoritative DNS server of a.com to query the A record of www.a.com.

Responsive to receiving the request, the authoritative DNS server of a.com provides an A record (ip1, ip2, ip3, ip4).

The authoritative DNS server of XXX.com sends a request to the authoritative DNS server of b.com to query the A record of www.b.com.

Responsive to receiving the request, the authoritative DNS server of b.com provides an A record (ip5, ip6).

The authoritative DNS server of XXX.com receives (ip1, ip2, ip3, ip4) and (ip5, ip6), and generates IP groups (ip1, ip2, ip3, ip4, ip5) and (ip1, ip2, ip3, ip4, ip6) according to the ratio of 4:1.

The authoritative DNS server of XXX.com randomly picks one IP group to feed back for the request of the local DNS server.

In the embodiments of the present disclosure, a target authoritative DNS server receives an A record query request for a target domain name sent by a local DNS server, and determines all CNAME domain names according to the stored CNAME records of the target domain name. The target authoritative DNS server acquires, from the authoritative DNS servers corresponding to all the CNAME domain names, the IP addresses corresponding to each CNAME domain name. The target authoritative DNS server combines the IP addresses corresponding to all the CNAME domain names according to a preset traffic pulling ratio of the target domain name to generate at least one IP group. The target authoritative DNS server randomly feeds back one IP group of the at least one IP group to the local DNS server. In this way, the authoritative DNS server feeds back the IP group to the local DNS server, where the IP group may include CDN nodes of multiple CDN service providers. Whether with the caching period or after the caching period of the local DNS server, the access traffic for the domain name may be both evenly pulled to the CDN nodes of different CDN service providers according to the traffic pulling ratio. Therefore, the problem in the existing technologies, that the traffic load on a CDN node is relatively high in a short period of time but fluctuates a lot in the long term, may be effectively alleviated.

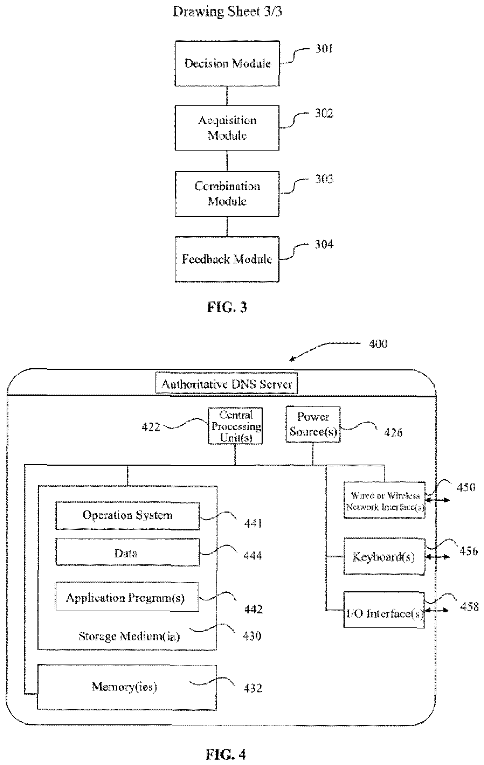

Based on the similar technical concepts, the embodiments of the present disclosure further provide a device for controlling a ratio of multi-CNAME traffic. As shown in FIG. 3, the device includes:
a decision module 301 that is configured to receive an A record query request for a target domain name sent by a local DNS server, and determine all CNAME domain names according to stored CNAME records of the target domain name;
an acquisition module 302 that is configured to acquire, from an authoritative DNS server corresponding to each CNAME domain name, IP addresses corresponding to each CNAME domain name of all the CNAME domain names;
a combination module 303 that is configured to combine IP addresses corresponding to all the CNAME domain names according to a preset traffic pulling ratio of the target domain name to generate at least one IP group; and
a feedback module 304 that is configured to randomly feed back one IP group of the at least one IP group to the local DNS server.

Optionally, the A record query request of the target domain name includes an IP address of the local DNS server or an IP address of a user terminal; and
the acquisition module 302 is specifically configured to:
for each CNAME domain name, send an A record query request of the CNAME domain name including the IP address of the local DNS server or the IP address of the user terminal to an authoritative DNS server corresponding to the CNAME domain name, and
receive IP addresses corresponding to the CNAME domain name determined and fed back, by the authoritative DNS server corresponding to the CNAME domain name, based on the IP address of the local DNS server or the IP address of the user terminal.

Optionally, the A record query request of the target domain name includes an IP address of the local DNS server or an IP address of the user terminal; and
the acquisition module 302 is specifically configured to:
for each CNAME domain name, send, by a target authoritative DNS server, an A record synchronization request to the authoritative DNS server corresponding to the CNAME domain name,
receive, by the target authoritative DNS server, all A records sent by the authoritative DNS server corresponding to the CNAME domain name, and
determine, by the target authoritative DNS server, IP addresses corresponding to the CNAME domain name in all the A records based on the IP address of the local DNS server or the IP address of the user terminal.

Optionally, the feedback module 304 is further configured to:
within a preset caching period of the A record of the target domain name, if the A record query request including the IP address of the local DNS server or the IP address of the user terminal is received again, randomly feed back one IP group of the at least one IP group.

Optionally, the decision module 301 is further configured to:
for each CNAME domain name, if the target authoritative DNS server itself has stored an authoritative DNS server record of the CNAME domain name, determine the authoritative DNS server corresponding to the CNAME domain name according to the authoritative DNS server record, and if the target authoritative DNS server itself has not stored the authoritative DNS server record of the CNAME domain name, recursively/iteratively query the authoritative DNS server corresponding to the CNAME domain name.

Optionally, within each IP group, a ratio of a total probability of IP addresses of CDN nodes being selected for each CDN service provider satisfies the traffic pulling ratio of the target domain name.

In the embodiments of the present disclosure, a target authoritative DNS server receives an A record query request for a target domain name sent by a local DNS server, and determines all CNAME domain names according to the stored CNAME records of the target domain name. The target authoritative DNS server acquires, from the authoritative DNS servers corresponding to all the CNAME domain names, the IP addresses corresponding to each CNAME domain name. The target authoritative DNS server combines the IP addresses corresponding to all the CNAME domain names according to a preset traffic pulling ratio of the target domain name, and generate at least one IP group. The target authoritative DNS server randomly feeds back one IP group of the at least one IP group to the local DNS server. In this way, the authoritative DNS server feeds back the IP group to the local DNS server, where the IP group may include CDN nodes of multiple CDN service providers. Whether with the caching period or after the caching period of the local DNS server, the access traffic for the domain name may be both evenly pulled to the CDN nodes of different CDN service providers according to the traffic pulling ratio. Therefore, the problem in the existing technologies, that the traffic load on a CDN node is relatively high in a short period of time but fluctuates a lot in the long term, may be effectively alleviated.

It should be noted that, in controlling the ratio of multi-CNAME traffic, the device(s) for controlling the ratio of multi-CNAME traffic provided by the above embodiments is illustrated merely by way of example of the foregoing division of the functional modules. In real applications, the foregoing functions may be allocated into and implemented by different functional modules according to the requirements. That is, the internal structure of the device(s) may be divided into different functional modules to complete all or part of the above-described functions. In addition, the device(s) for controlling the ratio of multi-CNAME traffic and the method(s) for controlling the ratio of multi-CNAME traffic provided by the foregoing embodiments is attributed to the same concept. Accordingly, for the specific implementation process of the device(s) provided by the embodiments, the embodiments for the method(s) may be referred to, details of which will not be described again here.

FIG. 4 is a schematic structural diagram of an authoritative DNS server according to some embodiments of the present disclosure. The authoritative DNS server 400 may vary considerably depending on the configuration or performance, and may include one or more central processing units 422 (e.g., one or more processors) and memories 432, one or more storage media 430 (e.g., one or one mass storage devices) for storing application programs 442 or data 444. Here, the memories 432 and the storage media 430 may be a volatile storage device or a non-volatile storage device. The programs stored on the storage media 430 may include one or more modules (not shown), each of which may include a series of operating instructions for the authoritative DNS server. Further, the central processing units 422 may be configured to communicate with the storage media 430, and execute, on the authoritative DNS server 400, a series of operating instructions stored in the storage media 430.

The authoritative DNS server 400 may further include one or more power sources 426, one or more wired or wireless network interfaces 450, one or more input and output interfaces 458, one or more keyboards 456, and/or one or more operating systems 441, such as Windows Server™, Mac OS X™, Unix™, Linux™, FreeBSD™, and the like.

The authoritative DNS server 400 may include a memory and one or more programs. The one or more programs are stored in the memory and configured to be executed by one or more processors to implement the one or more programs, which include instructions configured to perform the methods for controlling a ratio of multi-CNAME traffic described above.

A person skilled in the art may understand that all or part of the steps of the above embodiments may take the form of hardware implementation, or take the form of implementation of programs for directing the relevant hardware. The programs may be stored in a computer-readable storage medium. The storage medium may be a read-only memory, a magnetic disk, or an optical disk, etc.

Although the present disclosure has been described with reference to preferred embodiments, these embodiments should not be constructed as limiting the present disclosure. Any modifications, equivalent replacements, and improvements made without departing from the spirit and principle of the present disclosure shall fall within the scope of the protection of the present disclosure.

## Claims

1. A method for controlling a ratio of multi-CNAME traffic, comprising:
receiving, by a target authoritative DNS server, an A record query request for a target domain name sent by a local DNS server, and determining, by the target authoritative DNS server, all CNAME domain names according to stored CNAME records of the target domain name;
acquiring, by the target authoritative DNS server, IP addresses corresponding to each CNAME domain name of all the CNAME domain names from an authoritative DNS server corresponding to each CNAME domain name;
combining, by the target authoritative DNS server, IP addresses corresponding to all the CNAME domain names according to a preset traffic pulling ratio of the target domain name, to generate at least one IP group;
randomly feeding back, by the target authoritative DNS server, one IP group of the at least one IP group to the local DNS server.

2. The method according to claim 1, wherein the A record query request of the target domain name includes an IP address of the local DNS server or an IP address of a user terminal; and
acquiring, by the target authoritative DNS server, the IP addresses corresponding to each CNAME domain name for all the CNAME domain names from the authoritative DNS server corresponding to each CNAME domain name further includes:
for each CNAME domain name, sending, by the target authoritative DNS server, an A record query request of the CNAME domain name including the IP address of the local DNS server or the IP address of the user terminal to an authoritative DNS server corresponding to the CNAME domain name, and
receiving, by the target authoritative DNS server, IP addresses corresponding to the CNAME domain name determined and fed back by the authoritative DNS server corresponding to the CNAME domain name based on the IP address of the local DNS server or the IP address of the user terminal.

3. The method according to claim 1, wherein the A record query request of the target domain name includes an IP address of the local DNS server or an IP address of a user terminal; and
acquiring, by the target authoritative DNS server, the IP addresses corresponding to each CNAME domain name for all the CNAME domain names from the authoritative DNS server corresponding to each CNAME domain name further includes:
for each CNAME domain name, sending, by the target authoritative DNS server, an A record synchronization request to the authoritative DNS server corresponding to the CNAME domain name,
receiving, by the target authoritative DNS server, all A records sent by the authoritative DNS server corresponding to the CNAME domain name, and
determining, by the target authoritative DNS server, IP addresses corresponding to the CNAME domain name in all the A records based on the IP address of the local DNS server or the IP address of the user terminal.

4. The method according to claim 2 or 3, wherein, after generating the at least one IP group, the method further includes:
within a preset caching period of the A record of the target domain name, if the A record query request including the IP address of the local DNS server or the IP address of the user terminal is received again, randomly feeding back one IP group of the at least one IP group by the target authoritative DNS server.

5. The method according to claim 1, wherein, before acquiring, by the target authoritative DNS server, the IP addresses corresponding to each CNAME domain name for all the CNAME domain names from the authoritative DNS server corresponding to each CNAME domain name, the method further includes:
for each CNAME domain name, if the target authoritative DNS server itself has stored an authoritative DNS server record of the CNAME domain name, determining, by the target authoritative DNS server, the authoritative DNS server corresponding to the CNAME domain name according to the authoritative DNS server record, and if the target authoritative DNS server itself has not stored the authoritative DNS server record of the CNAME domain name, recursively/iteratively querying, by the target authoritative DNS server, the authoritative DNS server corresponding to the CNAME domain name.

6. The method according to claim 1, wherein, within each IP group, a ratio of a total probability of IP addresses of CDN nodes being selected for each CDN service provider satisfies the traffic pulling ratio of the target domain name.

7. A device for controlling a ratio of multi-CNAME traffic, comprising:
a decision module that is configured to receive an A record query request for a target domain name sent by a local DNS server, and determine all CNAME domain names according to stored CNAME records of the target domain name;
an acquisition module that is configured to acquire, from an authoritative DNS server corresponding to each CNAME domain name, IP addresses corresponding to each CNAME domain name of all the CNAME domain names;
a combination module that is configured to combine IP addresses corresponding to all the CNAME domain names according to a preset traffic pulling ratio of the target domain name to generate at least one IP group; and
a feedback module that is configured to randomly feed back one IP group of the at least one IP group to the local DNS server.

8. The device according to claim 7, wherein the A record query request of the target domain name includes an IP address of the local DNS server or an IP address of a user terminal; and
the acquisition module is further configured to:
for each CNAME domain name, send an A record query request of the CNAME domain name including the IP address of the local DNS server or the IP address of the user terminal to an authoritative DNS server corresponding to the CNAME domain name, and
receive IP addresses corresponding to the CNAME domain name determined and fed back, by the authoritative DNS server corresponding to the CNAME domain name, based on the IP address of the local DNS server or the IP address of the user terminal.

9. The device according to claim 7 or 8, wherein the A record query request of the target domain name includes an IP address of the local DNS server or an IP address of the user terminal; and
the acquisition module is further configured to:
for each CNAME domain name, send an A record synchronization request to the authoritative DNS server corresponding to the CNAME domain name,
receive all A records sent by the authoritative DNS server corresponding to the CNAME domain name, and
determine IP addresses corresponding to the CNAME domain name in all the A records based on the IP address of the local DNS server or the IP address of the user terminal.

10. The device according to claim 8, wherein the feedback module is further configured to:
within a preset caching period of the A record of the target domain name, if the A record query request including the IP address of the local DNS server or the IP address of the user terminal is received again, randomly feed back one IP group of the at least one IP group.

11. The device according to claim 7, wherein the decision module is further configured to:
for each CNAME domain name, if the target authoritative DNS server itself has stored an authoritative DNS server record of the CNAME domain name, determine the authoritative DNS server corresponding to the CNAME domain name according to the authoritative DNS server record, and if the target authoritative DNS server itself has not stored the authoritative DNS server record of the CNAME domain name, recursively/iteratively query the authoritative DNS server corresponding to the CNAME domain name.

12. The device according to claim 7, wherein, within each IP group, a ratio of a total probability of IP addresses of CDN nodes being selected for each CDN service provider satisfies the traffic pulling ratio of the target domain name.

13. An authoritative DNS server, comprising a processor and a memory, the memory storing at least one instruction, at least one program, a code set, or a set of instructions, which are loaded and executed by the processor to implement the method for controlling a ratio of multi-CNAME traffic according to any one of claims 1 to 6.

14. A computer-readable storage medium, the computer-readable storage medium storing at least one instruction, at least one program, a code set, or a set of instructions, which are loaded and executed by the processor to implement the method for controlling a ratio of multi-CNAME traffic according to any one of claims 1 to 6.
